# FASCICULE DE BREVET EUROPEEN

(11) **EP 0 500 410 B1**
(45) Date de publication et mention de la délivrance du brevet: **28.12.1994**
(21) Numéro de dépôt: 92400282.7
(22) Date de dépôt: 04.02.1992
(51) Int. Cl.: B23K 11/28, B23K 11/31, B23K 11/36

(54) **Pince à souder par points**
Punktschweisszange
Spot-welding electrode holder

(30) Priorité: 20.02.1991 FR 9102030
(43) Date de publication de la demande: 26.08.1992
(73) Titulaire: SAGEMU S.A., F-94250 Gentilly (FR)
(72) Inventeur: De Bruyn, Gérard, F-92160 Antony (FR); Lonchampt, André, F-78124 Mareil sur Mauldre (FR)
(74) Mandataire: Dawidowicz, Armand

(56) Documents cités:
- EP-A- 0 133 385
- US-A- 4 393 293

## Description

La présente invention concerne une pince à souder par points.

On connaît déjà des pinces à souder par points qui sont utilisées soit manuellement, soit incorporées à des machines, soit maintenant souvent incorporées à des robots dits, robots de soudure.

De telles pinces sont couramment utilisées et mises en oeuvre dans l'industrie automobile.

Elles comportent généralement deux bras, articulés l'un par rapport à l'autre et portant chacun une électrode.

Ces électrodes sont reliées à une source de courant et un mécanisme de commande engendre la rotation relative des bras de manière à rapprocher les électrodes et à les mettre en contact avec les pièces à souder.

L'état de la technique peut être notamment illustré par le document EP-A-0 133 385 qui concerne une unité de soudage électrique par résistance de type ciseaux. Son but est de remplacer dans le transformateur, nécessaire à l'activation des électrodes, les tresses souples reliant dans l'enroulement secondaire la prise aux électrodes par un système équivalent basé sur des contacts circulaires portés par l'axe de rotation des électrodes et également par le document US-A-4 393 293 qui concerne également une unité de soudage électrique par résistance du type ciseaux. Son but est de réussir à évacuer les poussières métalliques issues des frottements sur l'axe de rotation des électrodes, ces poussières étant à l'origine d'une augmentation de la résistance électrique au passage du courant dans l'axe.

Le bon fonctionnement d'une telle pince nécessite l'isolation des électrodes l'une par rapport à l'autre lorsqu'elles sont écartées. A cet effet, selon les techniques de l'art antérieur, l'isolation relative des bras est réalisée au niveau de leur axe d'articulation. Cette isolation nécessite la mise en oeuvre de rondelles et de canons isolants qui, placés entre deux pièces en mouvement relatif, sont soumis à une usure mécanique. Or, généralement, les matériaux ayant une bonne capacité d'isolation électrique sont mécaniquement assez peu résistants et leur usure est donc relativement rapide.

Dans le cas des pinces à souder par points cette usure nécessite des opérations d'entretien particulièrement contraignantes dans les conditions d'exploitation actuelles et qui engendrent des coûts d'entretien et de fonctionnement élevés.

Le but de la présente invention est la réalisation d'une pince à souder par points qui puisse être utilisée pendant une longue durée sans qu'il soit nécessaire de procéder à son entretien, par exemple, au changement d'éléments isolants.

Par ailleurs, jusqu'à présent, il est nécessaire de disposer d'un grand nombre de modèles de pinces à souder pour satisfaire aux différentes conditions d'utilisation. Ces conditions d'utilisation varient par le mode d'actionnement de la pince, manuel, pneumatique, hydraulique, électrique, par la longueur des bras et par l'importance du couple appliqué lors de la soudure. Ces derniers paramètres dépendent du type de pièces que l'on veut souder.

C'est un deuxième objectif de l'invention de proposer une pince à souder dont la structure est polyvalente et qui peut être modifiée en fonction du mode d'actionnement choisi et du type de pièces que l'on veut pouvoir souder.

A cet effet, l'invention concerne une pince à souder par points comprenant une articulation comportant deux supports, deux bras interchangeables chacun porté par l'un des supports et comportant une partie avant et une partie arrière et deux électrodes chacune fixée sur la partie avant de l'un des bras.

Selon l'invention l'un des supports est un support femelle comportant deux flancs latéraux chacun percé d'un orifice, l'autre support est un support mâle comportant un flanc central percé d'un orifice, un axe traversant les orifices du support femelle et l'orifice du support mâle de manière à assurer l'articulation du support mâle par rapport au support femelle, ledit axe portant deux plaques placées de part et d'autre du support mâle et le séparant du support femelle, les supports étant en aluminium et traités par anodisation dure et les plaques facilitant le glissement des supports l'un par rapport à l'autre.

Dans un mode de réalisation préféré chaque support comporte une chape ayant deux côtés et un fond, chacun des deux côtés ayant une ouverture, chaque bras comportant une ouverture à sa partie arrière et celle-ci étant conformée de manière à être en appui sur le fond de la chape de l'un des supports et fixée sur celui-ci par un axe traversant les ouvertures des côtés de la chape et celle de la partie arrière du bras.

Selon un mode de réalisation préféré lesdites plaques, portées par l'axe d'articulation des supports, sont des garnitures pour glissement à sec, comportant avantageusement une tôle support recouverte d'un revêtement à base de fibres fluorocarbonées.

L'invention sera décrite en détails en référence aux dessins dans lesquels :
- La figure 1 est une vue éclatée d'un mode de réalisation de la pince à souder de l'invention.

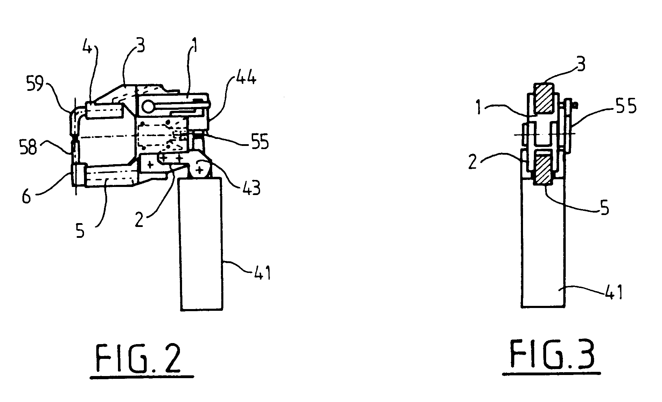

- La figure 2 est une vue de côté d'un des modes de réalisation de la pince à souder selon l'invention.
- La figure 3 est une vue arrière de la pince à souder selon l'invention.

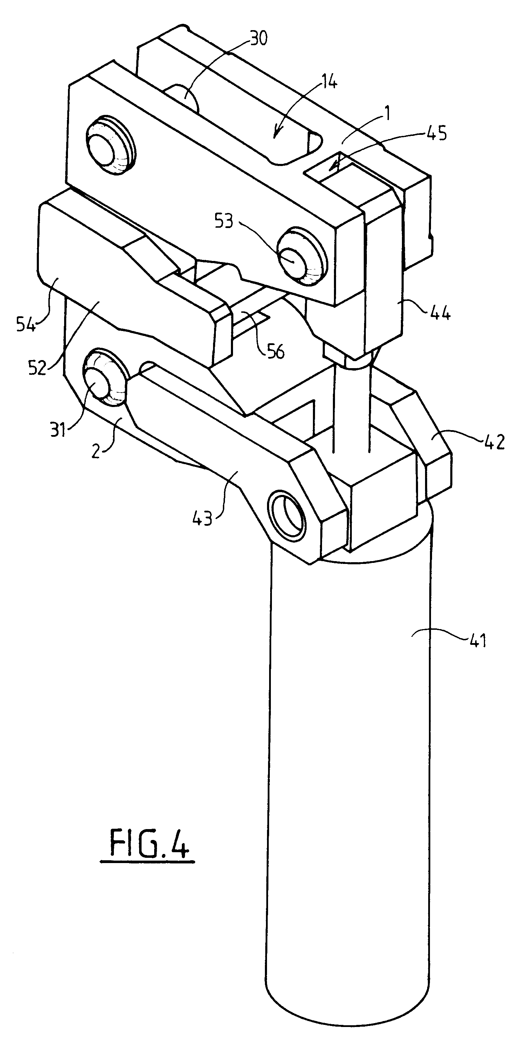

- La figure 4 est une vue en perspective dans un mode de réalisation de l'articulation de la pince de l'invention et de son dispositif de commande.

La pince à souder comporte un support mâle 1 et un support femelle 2 articulés l'un par rapport à l'autre. Le support 1 porte le bras supérieur 3. Ce bras supérieur 3 est relié au support 1 par sa partie arrière 3a et porte à sa partie avant 3b un porte-électrodes 4.

De manière analogue le bras inférieur 5 est relié au support 2 par sa partie arrière 5a et porte à sa partie avant 5b un porte-électrodes 6.

Le support mâle 1 comporte un flanc central 7 percé d'une ouverture 8.

Le support femelle 2 comporte deux flancs latéraux 9, 10 percé chacun d'une ouverture 11, 12.

Le flanc central 7 du support mâle 1 est engagé dans le support femelle 2, entre les flancs latéraux 9 et 10.

Un axe 13 traverse le support femelle et le support mâle par les ouvertures 8, 11 et 12 et assure l'articulation du support mâle 1 par rapport au support femelle 2. Cet axe 13 sera appelé par la suite axe d'articulation

Chacun des supports 1, 2 comporte à l'opposé de l'axe d'articulation 13 une chape , respectivement 14, 15 destinée à recevoir les parties arrière des bras 3a et 5a. Ces parties arrière, et plus particulièrent les faces 16 et 17 tournées vers l'axe d'articulation 13 qui sont conformées de manière à venir en appui sur les fonds 18, 19 de la chape à laquelle ils sont destinés.

De plus les côtés 20 à 23 des chapes 14 et 15 sont percés de trous 24 à 27 et les parties arrière des bras comportent des ouvertures 28, 29 destinées à coopérer avec les trous 24 à 27 formés dans les côtes des chapes 14 et 15. La partie arrière 3a du bras 3 est engagée dans la chape 14. L'axe 30 traversant cette chape 14 et ce bras 3 par leurs ouvertures 24, 25, 28 assure la fixation du bras 3 sur le support 1. La face 16 de la partie arrière 3a étant en appui sur le fond 18 de la chape 14, le bras 3 est rigidement fixé sur le support 1 sans qu'aucun mouvement ne lui soit autorisé.

De manière analogue le bras 5 est fixé sur le support 2. Sa partie arrière 5a est engagée dans la chape 15. L'axe 31 traverse le support 2 et le bras 5 par les ouvertures 26, 27, 29. La face 17 est en appui sur le fond 19 de la chape 15.

Les bras 3, 5 sont électriquement isolés des supports 1, 2. A cet effet des plaques isolantes 32-35 sont placées de part et d'autre des parties arrière 3a, 5a des bras 3, 5 à l'intérieur des chapes 14, 15. De plus les axes 30, 31 sont isolés des bras 3, 5 et des supports 1, 2 par des manchons isolants 36, 37.

Il doit être souligné ici que les bras 3, 5 étant fixes par rapport aux supports 1, 2, les éléments isolants 32 à 37 ne sont soumis à aucune contrainte de frottement susceptible d'engendrer leur usure rapide.

Selon une caractéristique importante de l'invention les supports 1 et 2 sont en aluminium et ont été traités par anodisation dure. Ce traitement est en lui-même connu. Il peut s'agir d'un procédé sulfurique ou sulfurique oxalique. Ce traitement est réalisé sur une épaisseur comprise entre 40 et 150 microns. Des procédés de ce type sont par exemple connus sous les marques déposées "SANFOR" et "DURKALU". Ainsi traités les supports 1 et 2 ont une très bonne résistance à l'usure et ils sont isoles l'un de l'autre.

Une bague 38, est fixée par ajustement dur dans le trou 8 du support mâle 1. Cette bague est traversée par l'axe d'articulation 13. De part et d'autre du flanc central 7 du support 1, à l'intérieur du logement formé par les flancs latéraux 9, 10 du support 2 sont placées des plaques 39, 40 facilitant le glissement des supports 1 et 2 l'un par rapport à l'autre, plus précisément ces plaques 39, 40 facilitent le glissement du flanc central 7 par rapport aux flancs latéraux 9 et 10.

De préférence ces plaques, 39, 40 sont des garnitures pour glissement à sec. Elles comportent une tôle support qui est recouverte d'un revêtement à base de fibres fluoro carbonées. On connaît de telles plaques commercialisées sous la dénomination "PYDANE".

De préférence la bague 38 et l'axe 13 sont en acier traité.

Ainsi, et cela constitue un avantage très important de l'invention, la liaison à frottement constituée par l'articulation autour de l'axe 13 du support 1 par rapport au support 2 ne comporte aucun élément d'usure, en matière isolante soumis à des contraintes de frottement. Pour cette raison cette articulation peut être utilisée dans des conditions difficiles et pendant une longue durée sans qu'aucune opération d'entretien ne soit nécessaire.

La liaison des bras 3, 5, sur l'articulation 1, 2, permet leur changement ou leur adaptation. Ainsi, une même articulation 1, 2, peut recevoir différents types de bras 3, 5, fonction de l'utilisation envisagée. Ces bras 3, 5, peuvent être en aluminium ou en cuivre.

La commande de la pince à souder est réalisée par le mécanisme globalement référencé 41. Ce mécanisme 41 comporte deux oreilles 42, 43 et une tête 44.

Cette tête 44 est reliée au support mâle 1 par une chape 45 placée à l'arrière de celui-ci. Les côtés de cette chape 45 sont percés de trous 46 et 47 la tête 44 est elle-même percée d'un trou 48. La tête 44 est engagée dans la chape 45 et un axe 49 assure la liaison, libre en rotation, de la tête 44, engagée dans la chape 45, sur le support 1.

Par ailleurs le support 2 comporte, à sa partie arrière deux mortaises latérales 50, 51 dans lesquelles sont engagées les oreilles 42, 43. Ainsi le support 2 est fixé sans possibilité de rotation sur la commande 41.

Un actionnement manuel, pneumatique, électrique ou hydraulique permet le déplacement relatif de la tête 44 par rapport aux oreilles 42 et 43 qui entraîne la rotation du support 1 par rapport au support 2 par là le mouvement relatif des bras 3 et 5.

Le fonctionnement de la pince à souder est optimisé lorsqu'elle est susceptible de se positionner librement lors du pincement des pièces à souder. Cet auto centrage est réalisé par la mise en oeuvre d'un équipage suspendant la pince tout en la maintenant libre en rotation par rapport à son axe d'articulation 13. Pour permettre sa mise en oeuvre l'axe 13 est creux et lui-même destiné à recevoir un axe en acier plein 53. Cet axe 53 relie deux plaques respectivement 54, 55 placées de part et d'autre du support femelle 2 et reliées également par l'entretoise 56. La plaque 55 est fixée rigidement sur la suspension 57 qui est le point d'accrochage fixe de la pince.

On comprend qu'ainsi l'axe d'articulation 13 est susceptible de rotation par rapport à l'axe 53 et permet la rotation de l'ensemble de la pince autour de celui-ci.

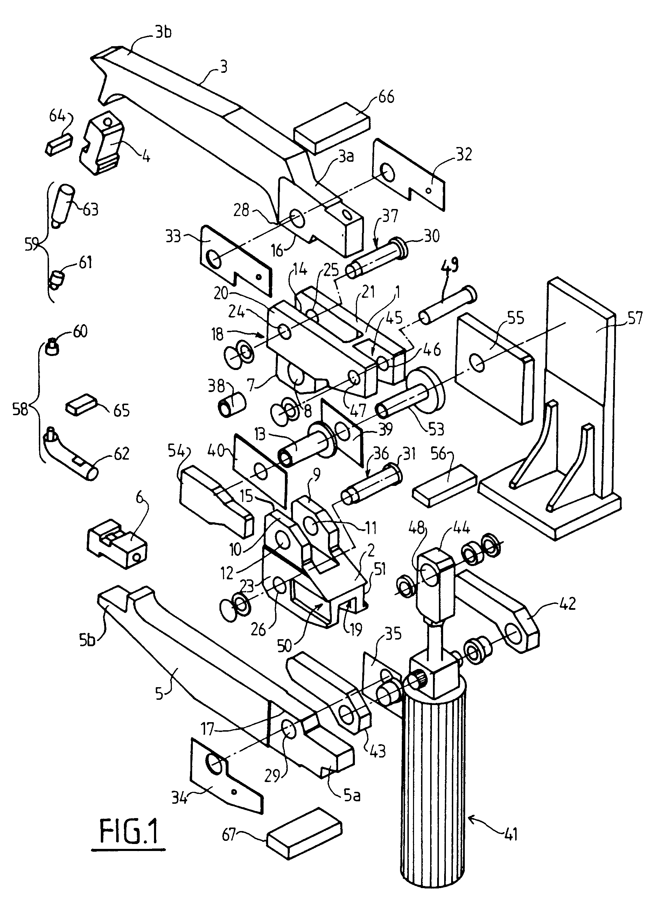

Les électrodes 58, 59 sont chacune constituées d'une mise 60, 61 et d'une allonge 62, 63. La forme des allonges 62, 63 dépend du type de soudure qui doit être réalisée avec la pince. Dans le mode de réalisation représenté à la figure 1 l'allonge inférieure 62 est coudée alors que l'allonge supérieure 63 est droite. La fixation des allonges 62, 63 sur les porte-électrodes 4, 6 est avantageusement réalisée avec les brides 64, 65. L'alimentation électrique de la pince est obtenue par l'intermédiaire des bras 3, 5 sur lesquels sont vissées les cosses 66, 67.

De préférence les bras 3, 5 comportent des canaux destinés à être reliés à un dispositif de circulation de liquide assurant le refroidissement de la pince.

La pince à souder par points est généralement alimentée par une source de 5 à 8 Volts traversée par des courants compris entre 8 000 et 15 000 Ampères.

Les couples appliqués entre les bras sont généralement compris entre 800 et 3 000 mN.

La pince à souder par points de l'invention est comme nous l'avons vu particulièrement résistante et ne nécessite qu'un très faible entretien, de plus elle est modulaire et une même articulation est susceptible de recevoir des bras de dimensions et de caractéristiques variées. Bien entendu, pour couvrir l'ensemble des besoins, plusieurs dimensions d'articulation peuvent être nécessaires, mais il est considéré que trois articulations permettent de couvrir l'ensemble des besoins. La même articulation peut être actionnée par un mécanisme manuel, pneumatique, électrique ou hydraulique.

## Revendications

1. Pince à souder par points comprenant une articulation comportant deux supports (1, 2), deux bras (3, 5) interchangeables chacun porté par l'un des supports (1, 2), et comportant une partie avant et une partie arrière, et deux électrodes (58, 59) chacune fixée sur la partie avant de l'un des bras
caractérisée en ce que
l'un des supports (2) est un support femelle comportant deux flancs latéraux (9, 10) chacun percé d'un orifice (11, 12)
l'autre support (1) est un support mâle comportant un flanc central percé d'un orifice (8)
un axe (13) traversant les orifices du support femelle (2) et l'orifice du support mâle (1) de manière à assurer l'articulation du support mâle (1) par rapport au support femelle (2)
ledit axe (13) portant deux plaques (39, 40) placées de part et d'autre du support mâle (1) et le séparant du support femelle (2), les supports (1, 2) étant en aluminium et traités par anodisation dure pour les isoler électriquement l'un de l'autre et les plaques (39, 40) facilitant le glissement des supports l'un par rapport à l'autre
chaque support (1, 2) comporte une chape (14, 15) ayant deux côtés et un fond, les deux côtés ayant une ouverture (24-27), chaque bras (3, 5) comporte une ouverture à sa partie arrière et celle-ci est conformée de manière à être en appui sur le fond de la chape (14, 15) de l'un des supports et fixée sur celui-ci par un axe (30, 31) traversant les ouvertures des côtés de la chape et celle de la partie arrière du bras.

2. Pince à souder par points selon la revendication 1, caractérisée en ce qu'elle comporte des porte-électrodes (4, 6) placés à l'avant de chaque bras entre celui-ci et son électrode (58, 59).

3. Pince à souder par points selon la revendication 1 ou 2, caractérisée en ce qu'elle comporte un mécanisme de commande (41) coopérant avec les supports (1, 2), maintenant les électrodes éloignées au repos et les rapprochant lorsqu'il est actionné.

4. Pince à souder par points selon la revendication 3, caractérisée en ce que le mécanisme de commande (41) est à actionnement pneumatique.

5. Pince à souder par points selon la revendication 3, caractérisée en ce que le mécanisme de commande (41) est à actionnement électrique.

6. Pince à souder par points selon la revendication 3, caractérisée en ce que le mécanisme de commande (41) est à actionnement hydraulique.

7. Pince à souder par points selon l'une quelconque des revendications 1 à 6, caractérisée en ce que les bras (3, 5) sont en aluminium.

8. Pince à souder par points selon l'une quelconque des revendications 1 à 6, caractérisée en ce que les bras (3, 5) sont en cuivre.

9. Pince à souder par points selon l'une quelconque des revendications 1 à 8, caractérisée en ce que lesdites plaques (39, 40) sont des garnitures pour glissement à sec.

10. Pince à souder par points selon la revendication 9, caractérisée en ce que lesdites plaques (39, 40) comportent une tôle support recouverte d'un revêtement à base de fibres fluorocarbonées.

11. Pince à souder par points selon l'une quelconque des revendications 1 à 10, caractérisée en ce que l'axe d'articulation des supports (1, 2) comporte une bague (38), un axe creux (13), et un axe plein (53), ces trois éléments étant en acier traité, permettant l'auto centrage de la pince par rotation autour de l'axe (53).

12. Pince à souder par points selon la revendication 11, caractérisée en ce que la bague (38) est fixée par ajustement dur dans les ouvertures du support mâle.

13. Pince à souder par points comprenant une articulation comportant deux supports (1, 2), deux bras (3, 5) interchangeables chacun porté par l'un des supports (1, 2), et comportant une partie avant et une partie arrière, et deux électrodes (58, 59) chacune fixée sur la partie avant de l'un des bras
caractérisée en ce que
l'un des supports (2) est un support femelle comportant deux flancs latéraux (9, 10) chacun percé d'un orifice (11, 12)
l'autre support (1) est un support mâle comportant un flanc central percé d'un orifice (8)
un axe (13) traversant les orifices du support femelle (2) et l'orifice du support mâle (1) de manière à assurer l'articulation du support mâle (1) par rapport au support femelle (2)
ledit axe (13) étant creux et traversé par un axe (53) relié de part et d'autre à deux plaques (54, 55), ces deux plaques étant parallèles et reliées par une entretoise (56) et, l'une d'entre-elles étant destinée à être fixée à un support (57) portant la pince.

14. Pince à souder par points selon la revendication 13, caractérisée en ce que chaque support (1, 2) comporte une chape (14, 15) ayant deux côtés et un fond, les deux côtés ayant une ouverture (24-27), chaque bras (3, 5) comporte une ouverture à sa partie arrière et celle-ci est conformée de manière à être en appui sur le fond de la chape (14, 15) de l'un des supports et fixée sur celui-ci par un axe (30, 31) traversant les ouvertures des côtés de la chape et celle de la partie arrière du bras.

15. Pince à souder par points selon la revendication 14, caractérisée en ce qu'elle comporte un mécanisme de commande (41) coopérant avec les supports (1, 2), maintenant les électrodes éloignées au repos et les rapprochant lorsqu'il est actionné.

16. Pince à souder par points selon l'une quelconque des revendications 13 à 15, caractérisée en ce que l'axe d'articulation des supports (1, 2) comporte une bague (38), cette bague (38), l'axe creux (13), et l'axe plein (53), étant en acier traité et permettant l'auto centrage de la pince par rotation autour de l'axe (53).

17. Pince à souder par points selon la revendication 16, caractérisée en ce que la bague (38) est fixée par ajustement dur dans les ouvertures du support femelle.

18. Pince à souder par points selon l'une quelconque des revendications 13 à 17, caractérisée en ce qu'elle comporte des porte-électrodes (4, 6) placés à l'avant de chaque bras entre celui-ci et son électrode (58, 59).

19. Pince à souder par points selon l'une quelconque des revendications 15 à 18, caractérisée en ce que le mécanisme de commande (41) est à actionnement pneumatique.

20. Pince à souder par points selon l'une quelconque des revendications 15 à 18, caractérisée en ce que le mécanisme de commande (41) est à actionnement électrique.

21. Pince à souder par points selon l'une quelconque des revendications 15 à 18, caractérisée en ce que le mécanisme de commande (41) est à actionnement hydraulique.

22. Pince à souder par points selon l'une quelconque des revendications 13 à 19, caractérisée en ce que les bras (3, 5) sont en aluminium.

23. Pince à souder par points selon l'une quelconque des revendications 13 à 21, caractérisée en ce que les bras (3, 5) sont en cuivre.

## Claims

1. A spot-welding electrode holder comprising a joint comprising two supports (1, 2), two interchangeable arms (3, 5) each supported by one of the supports (1, 2), and comprising a front part and a rear part, and two electrodes (58, 59) each fixed to the front part of one of the arms
characterised in that
one of the supports (2) is a female support comprising two lateral flanks (9, 10) each pierced by a hole (11, 12)
the other support (1) is a male support comprising a centre flank pierced by a hole (8)
an axle (13) traversing the holes of the female support (2) and the hole of the male support (1) in order to ensure the articulation of the male support (1) with respect to the female support (2)
the said axle (13) having two plates (39, 40) placed on either side of the male support (1) and separating it from the female support (2), the supports (1, 2) being of aluminium and treated by hard anodic oxidation to isolate them electrically from each other and the plates (39, 40) facilitating the sliding of the supports with respect to each other
each support (1, 2) comprising a fork joint (14, 15) having two sides and a base, the two sides having an opening (24-27), and each arm (3, 5) comprising an opening in its rear part with this part being correspondingly shaped in order to be supported against the base of the fork joint (14, 15) of one of the supports and fixed thereon by an axle (30, 31) traversing the openings of the sides of the fork joint and that of the rear part of the arm.

2. A spot-welding electrode holder according to claim 1, characterised in that it comprises electrode supports (4, 6) placed in front of each arm between the arm and its electrode (58, 59).

3. A spot-welding electrode holder according to claim 1 or 2, characterised in that it comprises a control mechanism (41) cooperating with the supports (1, 2), keeping the electrodes spaced at rest and bringing them closer when it is actuated.

4. A spot-welding electrode holder according to claim 3, characterised in that the control mechanism (41) is pneumatically operated.

5. A spot-welding electrode holder according to claim 3, characterised in that the control mechanism (41) is electrically operated.

6. A spot-welding electrode holder according to claim 3, characterised in that the control mechanism (41) is hydraulically operated.

7. A spot-welding electrode holder according to any of claims 1 to 6, characterised in that the arms (3, 5) are of aluminium.

8. A spot-welding electrode holder according to any of claims 1 to 6, characterised in that the arms (3, 5) are of copper.

9. A spot-welding electrode holder according to any of claims 1 to 8, characterised in that the said plates (39, 40) are dry slide fittings.

10. A spot-welding electrode holder according to claim 9, characterised in that the said plates (39, 40) comprise a support sheet covered with a coating of a fluorocarbonated fibre base.

11. A spot-welding electrode holder according to any of claims 1 to 10, characterised in that the articulation axle of the supports (1, 2) comprises a ring (38), a hollow axle (13) and a solid axle (53), these three elements being of treated steel, permitting the self-centring of the holder by rotation about the axle (53).

12. A spot-welding electrode holder according to claim 11, characterised in that the ring (38) is fixed by hard adjustment in the openings of the male support.

13. A spot-welding electrode holder comprising a joint comprising two supports (1, 2), two interchangeable arms (3, 5) each supported by one of the supports (1, 2), and comprising a front part and a rear part, and two electrodes (58, 59) each fixed on the front part of one of the arms
characterised in that
one of the supports (2) is a female support comprising two lateral flanks (9, 10) each pierced by a hole (11, 12)
the other support (1) is a male support comprising a centre flank pierced by a hole (8)
an axle (13) traversing the holes of the female support (2) and the hole of the male support (1) in such a way as to ensure the articulation of the male support (1) with respect to the female support (2)
the said axle (13) being hollow and traversed by an axle (53) connected on either side to two plates (54, 55), these two plates being parallel and connected by a tie (56), and one of them being intended to be fixed to a support (57) supporting the holder.

14. A spot-welding electrode holder according to claim 13, characterised in that each support (1, 2) comprises a fork joint (14, 15) having two sides and a base, the two sides having an opening (24-27), each arm (3, 5) comprising an opening in its rear part and this part being correspondingly formed in order to be supported on the base of the fork joint (14, 15) of one of the supports and fixed thereon by an axle (30, 31) traversing the openings of the sides of the fork joint and that of the rear part of the arm.

15. A spot-welding electrode holder according to claim 14, characterised in that it comprises a control mechanism (41) cooperating with the supports (1, 2), keeping the electrodes spaced at rest and bringing them closer when it is actuated.

16. A spot-welding electrode holder according to any of claims 13 to 15, characterised in that the articulation axis of the supports (1, 2) comprises a ring (38), this ring (38), the hollow axle (13) and the solid axle (53) being of treated steel and permitting the self-centring of the holder by rotation about the axle (53).

17. A spot-welding electrode holder according to claim 16, characterised in that the ring (38) is an interference fit in the openings of the female support.

18. A spot-welding electrode holder according to any of claims 13 to 17, characterised in that it comprises electrode supports (4, 6) placed in front of each arm between the arm and its electrode (58, 59).

19. A spot-welding electrode holder according to any of claims 15 to 18, characterised in that the control mechanism (41) is pneumatically operated.

20. A spot-welding electrode holder according to any of claims 15 to 18, characterised in that the control mechanism (41) is electrically operated.

21. A spot-welding electrode holder according to any of claims 15 to 18, characterised in that the control mechanism (41) is hydraulically operated.

22. A spot-welding electrode holder according to any of claims 13 to 19, characterised in that the arms (3, 5) are of aluminium.

23. A spot-welding electrode holder according to any of claims 13 to 21, characterised in that the arms (3, 5) are of copper.

## Patentansprüche

1. Punktschweißzange, die zwei schwenkbare miteiander verbundene Tragkörper (1, 2), zwei untereinander austauschbare und jeweils in einem der Tragkörper (1, 2) gelagerte Arme (3, 5) mit je einem vorderen und einem hinteren Teil sowie zwei jeweils am Vorderteil eines dieser Arme befestigte Elektroden (58, 59) umfaßt,
**dadurch gekennzeichnet**, **daß**
einer dieser Tragkörper (2) als Aufnahmeteil mit zwei seitlichen Laschen (9, 10) ausgeführt ist, die jeweils eine durchgehende Öffnung (11, 12) aufweisen;
der andere Tragkörper (1) als Einsteckteil mit einer mittigen Lasche ausgeführt ist, die eine durchgehende Öffnung (8) aufweist;
wobei eine Achse (13) so durch die Öffnungen des Aufnahmetragkörpers (2) und die Öffnung des Einstecktragkörpers (1) hindurchgeführt ist, daß der Einstecktragkörper (1) relativ zu dem Aufnahmetragkörper (2) schwenkbar gelagert ist;
wobei die genannte Achse (13) zwei Platten (39, 40) tragt, die beiderseits des Einstecktragkörpers (1) angeordnet sind und diesen von dem Aufnahmetragkörper (2) trennen, wobei die Tragkörper (1, 2) aus harteloxiertem Aluminium ausgeführt sind, um sie elektrisch voneinander zu isolieren, und die Platten (39, 40) die Gleitbeweglichkeit der Tragkörper relativ zueinander erleichtern;
wobei die Tragkörper (1, 2) je einen Gabelkopf (14, 15) mit zwei Seitenteilen und einem Boden aufweisen, die beiden Seitenteile jeweils über eine Öffnung (24-27) verfügen, und das hintere Teil der Arme (3, 5) je eine Öffnung aufweist und so ausgebildet ist, daß es auf dem Bodenteil des Gabelkopfes (14, 15) eines der Tragkörper ruht und an letzterem mittels einer Achse (30, 31) befestigt wird, die durch die Öffnungen der Gabelkopf-Seitenteile sowie die Öffnung im hinteren Teil des Armes hindurchgesteckt wird.

2. Punktschweißzange gemaß Anspruch 1, **dadurch gekennzeichnet, daß** diese mit Elektrodenhalterungen (4, 6) ausgestattet ist, die vorne an jedem Arm zwischen diesem Arm und seiner Elektrode (58, 59) angeordnet sind.

3. Punktschweißzange gemaß einem der Ansprüche 1 oder 2, **dadurch gekennzeichnet, daß** diese über einen Betätigungsmechanismus (41) verfügt, der mit den Tragkörpern (1, 2) zusammenwirkt und die Elektroden in seiner Ruhestellung voneinander getrennt hält, diese jedoch einander annähert, wenn er betätigt wird.

4. Punktschweißzange gemäß Anspruch 3, **dadurch gekennzeichnet, daß** der Betätigungsmechanismus (41) pneumatisch angetrieben wird.

5. Punktschweißzange gemäß Anspruch 3, **dadurch gekennzeichnet, daß** der Betätigungsmechanismus (41) elektrisch angetrieben wird.

6. Punktschweißzange gemäß Anspruch 3, **dadurch gekennzeichnet, daß** der Betätigungsmechanismus (41) hydraulisch angetrieben wird.

7. Punktschweißzange gemäß einem der Ansprüche 1 - 6, **dadurch gekennzeichnet, daß** die Arme (3, 5) aus Aluminium bestehen.

8. Punktschweißzange gemäß einem der Ansprüche 1 - 6, **dadurch gekennzeichnet, daß** die Arme (3, 5) aus Kupfer bestehen.

9. Punktschweißzange gemäß einem der Ansprüche 1 - 8, **dadurch gekennzeichnet**, **daß** es sich bei den Platten (39, 40) um Trockengleitelemente handelt.

10. Punktschweißzange gemäß Anspruch 9, **dadurch gekennzeichnet**, **daß** die Platten (39, 40) jeweils aus einem Tragblech bestehen, das eine Beschichtung aus Fluorkarbonfasern trägt.

11. Punktschweißzange gemäß einem der Ansprüche 1 - 10, **dadurch gekennzeichnet, daß** die Gelenkachse der Tragkörper (1, 2) eine Hülse (38), eine Hohlachse (13) sowie eine massive Achse (53) umfaßt, die jeweils aus Vergütungsstahl bestehen und eine automatische Zentrierung der Zange durch die Drehung um die Achse (53) ermöglichen.

12. Punktschweißzange gemäß Anspruch 11, **dadurch gekennzeichnet**, **daß** die Hülse (38) in den Öffnungen des Einstecktragkörpers im Preßsitz befestigt ist.

13. Punktschweißzange, die zwei schwenkbar miteinander verbundene Tragkörper (1, 2), zwei untereinander austauschbare und jeweils in einem der Tragkörper (1, 2) gelagerte Arme (3, 5) mit je einem vorderen und einem hinteren Teil sowie zwei jeweils am Vorderteil eines dieser Arme befestigte Elektroden (58, 59) umfaßt,
**dadurch gekennzeichnet, daß**
einer dieser Tragkörper (2) als Aufnahmeteil mit zwei seitlichen Laschen (9, 10) ausgeführt ist, die jeweils eine durchgehende Öffnung (11, 12) aufweisen;
der andere Tragkörper (1) als Einsteckteil mit einer mittigen Lasche ausgeführt ist, die eine durchgehende Öffnung (8) aufweist;
wobei eine Achse (13) so durch die Öffnungen des Aufnahmetragkörpers (2) und die Öffnung des Einstecktragkörpers (1) hindurchgeführt ist, daß der Einstecktragkörper (1) relativ zu dem Aufnahmetragkörper (2) schwenkbar gelagert ist;
und wobei es sich bei dieser Achse (13) um eine Hohlachse handelt, durch die eine Achse (53) hindurchführt, welche an jedem Ende mit einer Platte (54, 55) verbunden ist, und diese beiden Platten parallel verlaufen und miteinander durch ein Distanzelement (56) verbunden sind und eine dieser Platten zur Befestigung an einem die Zange tragenden Ständer (57) bestimmt ist.

14. Punktschweißzange gemäß Anspruch 13, **dadurch gekennzeichnet**, **daß** die Tragkörper (1, 2) je einen Gabelkopf (14, 15) mit zwei Seitenteilen und einem Boden aufweisen, wobei die beiden Seitenteile jeweils über eine Öffnung (24-27) verfügen, und das hintere Teil der Arme (3, 5) je eine Öffnung aufweist und so ausgebildet ist, daß es auf dem Bodenteil des Gabelkopfes (14, 15) eines der Tragkörper ruht und an letzterem mittels einer Achse (30, 31) befestigt wird, die durch die Öffnungen der Gabelkopf-Seitenteile sowie die Öffnung im hinteren Teil des Armes hindurchgesteckt wird.

15. Punktschweißzange gemäß Anspruch 14, **dadurch gekennzeichnet**, **daß** diese über einen Betätigungsmechanismus (41) verfügt, der mit den Tragkörpern (1, 2) zusammenwirkt und die Elektroden in seiner Ruhestellung voneinander getrennt hält, diese jedoch einander annähert, wenn er betätigt wird.

16. Punktschweißzange gemäß einem der Ansprüche 13 - 15, **dadurch gekennzeichnet**, **daß** die Gelenkachse der Tragkörper (1, 2) eine Hülse (38) umfaßt, wobei sowohl diese Hülse (38) als auch die Hohlachse (13) und die massive Achse (53) aus Vergütungsstahl bestehen und zusammen eine automatische Zentrierung der Zange durch die Drehung um die Achse (53) ermöglichen.

17. Punktschweißzange gemäß Anspruch 16, **dadurch gekennzeichnet**, **daß** die Hülse (38) in den Öffnungen des Aufnahmetragkörpers im Preßsitz befestigt ist.

18. Punktschweißzange gemäß einem der Ansprüche 13 - 17, **dadurch gekennzeichnet, daß** diese mit Elektrodenhalterungen (4, 6) ausgestattet ist, die vorne an jedem Arm zwischen diesem Arm und seiner Elektrode (58, 59) angeordnet sind.

19. Punktschweißzange gemäß einem der Ansprüche 15 - 18, **dadurch gekennzeichnet, daß** der Betätigungsmechanismus (41) pneumatisch angetrieben wird.

20. Punktschweißzange gemäß einem der Ansprüche 15 - 18, **dadurch gekennzeichnet, daß** der Betätigungsmechanismus (41) elektrisch angetrieben wird.

21. Punktschweißzange gemäß einem der Ansprüche 15 - 18, **dadurch gekennzeichnet**, **daß** der Betätigungsmechanismus (41) hydraulisch angetrieben wird.

22. Punktschweißzange gemäß einem der Ansprüche 13 - 19, **dadurch gekennzeichnet**, **daß** die Arme (3, 5) aus Aluminium bestehen.

23. Punktschweißzange gemäß einem der Ansprüche 13 - 21, **dadurch gekennzeichnet**, **daß** die Arme (3, 5) aus Kupfer bestehen.
